# EUROPÄISCHE PATENTANMELDUNG

(11) **EP 0 734 893 A1**
(43) Veröffentlichungstag der Anmeldung: **02.10.1996**
(21) Anmeldenummer: 96104107.6
(22) Anmeldetag: 15.03.1996
(51) Int. Cl.: B60J 7/00

(54) **Fahrzeugdach**

(30) Priorität: 25.03.1995 DE 19511067
(71) Anmelder: Webasto Systemkomponenten GmbH, 82131 Stockdorf (DE)
(72) Erfinder: Jardin, Hans, 82266 Inning-Bachern (DE); Paetz, Werner, 02763 Zittau (DE)
(74) Vertreter: Wiese, Gerhard

(57) **Zusammenfassung**

Die Erfindung betrifft ein Fahrzeugdach 1 mit einem eine Dachöffnung 2 wahlweise verschließenden oder zumindestens teilweise freigebenden Deckel 3 sowie mit einem unterhalb des Deckels 3 verschiebbar angeordneten Himmel 6 aus einem wasserfesten, transparenten Material. Gegenüber einer bekannten Ausführung, bei der der transparente Himmel in Verbindung mit einem nicht lichtdurchlässigen Deckel zwar Variationsmöglichkeiten hinsichtlich der Lichtdurchlässigkeit des gesamten Fahrzeugdaches ermöglicht, ist beim erfindungsgemäßen Fahrzeugdach eine zusätzliche Lüftungsmöglichkeit dadurch geschaffen, daß der Himmel 6 Lüftungsöffnungen 21 aufweist, die derart ausgebildet sind, daß sie Eindringen von Wasser verhindern. Die Lüftungsöffnungen sind vorzugsweise als in Fahrtrichtung hinten offene Schlitze 23 ausgebildet, welche vorzugsweise mittels bewegbarer Teile (Schieber 24) wahlweise freilegbar oder verschließbar sind.

## Beschreibung

Die Erfindung betrifft ein Fahrzeugdach mit einem eine Dachöffnung wahlweise verschließenden oder zumindestens teilweise freigebenden Deckel sowie mit einem unterhalb des Deckels verschiebbar angeordneten Himmel aus einem wasserfesten, transparenten Material.

Ein derartiges Fahrzeugdach ist aus der DE-PS 713 106 bekannt. Die dort unter einem undurchsichtigen Schiebedachdeckel angeordnete durchsichtige Schiebeplatte ist zwar dazu geeignet, bei geöffnetem Deckel die freigegebene Dachöffnung mit einer transparenten wasserfesten Schiebeplatte abzudecken und dadurch den Blick nach oben freizugeben, jedoch ist dort keine Möglichkeit einer Belüftung des Innenraums über die Dachöffnung bei gleichzeitig wasserfester Abdeckung des Innenraums vorgesehen.

Der vorliegenden Erfindung liegt die Aufgabe zugrunde, ein Fahrzeugdach zu schaffen, bei dem eine Dachöffnung wahlweise mittels eines undurchsichtigen Deckels oder eines transparenten wasserdichten Himmels abdeckbar ist und bei dem zusätzlich auch bei einer wasserdichten Abdeckung variable Entlüftungsmöglichkeiten für den Innenraum geschaffen werden.

Diese Aufgabe wird erfindungsgemäß durch die im Patentanspruch 1 angegebenen Mittel gelöst. Vorteilhafte Ausgestaltungen der Erfindung sind den Unteransprüchen zu entnehmen.

Dadurch, daß der Himmel Lüftungsöffnungen aufweist, die derart ausgebildet sind, daß sie ein Eindringen von Wasser verhindern, besteht für die Insassen eines mit einem derartigen Fahrzeugdach ausgestatteten Fahrzeuges eine hohe Flexibilität zur Anpassung dieses Daches an die Umgebungsbedingungen. So können bei winterlichen Verhältnissen sowohl der Deckel als auch der Himmel geschlossen werden, wodurch sich ein dichter Abschluß des Daches mit einer guten Wärmeisolation einstellt. Es ist jedoch auch möglich, den Deckel mit seiner Hinterkante nach Art eines Schiebe-Hebedaches in bekannter Weise auszustellen, wobei dann die Lüftungsöffnungen im Himmel für eine zugfreie zusätzliche Entlüftungsmöglichkeit des Innenraums sorgen. Es ist des weiteren möglich, den festen Schiebedeckel nach hinten unter die feste Dachhaut zu verfahren, dabei jedoch den Himmel geschlossen zu halten, wobei sich eine freie Sicht nach oben mit einer zusätzlichen Entlüftungsmöglichkeit über die im Himmel vorgesehenen Lüftungsöffnungen ergibt. Und es besteht schließlich die Möglichkeit unabhängig von der Stellung des Deckels den Himmel teilweise oder ganz zu öffnen, wobei sich bei vollständig geöffnetem Deckel und vollständig geöffnetem Himmel ein ungehinderter Durchblick nach oben mit einer entsprechend großen Be- und Entlüftungsöffnung ergibt. In Himmeln von Fahrzeugdächern vorgesehene Lüftungsöffnungen sind an sich beispielsweise aus der DE-C3 29 23 904 bekannt, bislang jedoch nie in Verbindung mit einem transparenten und aus einem wasserfesten Material bestehenden Himmel, sodaß dort auch keine erfindungsgemäße Ausgestaltung jener Lüftungsöffnung zur Verhinderung eines Eindringens von Regenwasser vorgesehen war.

Eine Vergrößerung der Variantenvielfalt für eine Be- bzw. Entlüfung des Innenraums ergibt sich dadurch, daß die Lüftungsöffnungen durch bewegbare Teile, wie Schieber, verschließbar sind. Ein erhöhter Bedienungskomfort ergibt sich dadurch, daß die bewegbaren Teile bei einem Öffnen des Deckels zwangsweise in Öffnungsrichtung betätigbar sind. Hierdurch wird beispielsweise gekoppelt an eine Ausstellbewegung der Hinterkante des Deckels eine zumindestens teilweise Freigabe der Lüftungsöffnungen bewirkt, die dem im Regelfall bei einer Ausstellen des Deckels vorliegenden Wunsch des Bedieners nach einem erhöhten Luftdurchsatz entspricht.

Zur Reduzierung des dafür erforderlichen Aufwandes ist es vorteilhaft, wenn eine solche zwangsweise Betätigung der bewegbaren Teile durch einen Antrieb des Deckels erfolgt. Eine Einrichtung zum zwangsweisen Freilegen von an einem Himmel vorgesehenen Lüftungsschlitzen bei einer Ausstellbewegung eines Deckels ist für sich gesehen aus der EP-B1 0150470 bekannt.

Eine weitere Erhöhung des Fahrkomforts ergibt sich dadurch, daß bei einer Ausstattung eines Fahrzeugdaches mit Mitteln zum zwangsweisen Öffnen des Himmels zwischen den bewegbaren Teilen und dem Antrieb des Deckels eine manuell betätigbare Kupplung zum Ein- und Ausschalten der zwangsweisen Betätigung angeordnet ist. Hierdurch ist dem Bediener anheim gegeben, selbst zu bestimmen, ob er von dem automatischen Freilegen der Lüftungsschlitze bei einem Ausstellen Gebrauch machen will oder nicht.

Aus optischen und funktionellen Gründen ist es vorteilhaft, wenn die Mittel zum Öffnen bzw. Schließen der Lüftungsöffnungen über der oberen Deckfläche des Himmels angeordnet sind. Alternativ oder ergänzend dazu ist es vorteilhaft, wenn die Mittel zum Öffnen bzw. Schließen der Lüftungsöffnungen zumindestens teilweise in den Lüftungsöffnungen verlaufen. Hierdurch wird ein Doppelnutzen erzielt, gemäß dem die Lüftungsöffnungen sowohl für den Durchtritt von Luft als auch für den Durchtritt eines Teils der Betätigungsmittel verwendet werden. Somit sind die bewegbaren Teile zum Öffnen und Schließen der Lüftungsöffnungen zwar von der Unterseite des Himmels her bedienbar, die Durchführung an die obere Deckfläche des Himmel erfolgt jedoch in einem Bereich, der ohnehin so gestaltet ist, daß er ein Durchdringen von Wasser sicher verhindert.

Gemäß einer vorteilhaften Ausgestaltungsform werden die Lüftungsöffnungen von Schlitzen gebildet, deren Unterkante über der oberen Deckfläche des Himmels angeordnet ist. Eine besonders zugfreie Ausgestaltung ergibt sich dabei dadurch, daß diese Schlitze in Fahrtrichtung nach hinten offen sind. Derartige Schlitze werden zur Vermeidung des Durchtretens auch kleinster Wassertropfen vorteilhaft von oben her abgedeckt.

Nachfolgend ist ein Ausführungsbeispiel der Erfindung anhand der Zeichnung beschrieben. Es zeigt:
- Fig. 1: eine schematische Draufsicht auf ein Fahrzeugdach,
- Fig. 2: einen schematischen Längsschnitt durch ein Fahrzeugdach,
- Fig. 3: einen Teilquerschnitt gemäß der Schnittlinie III-III in Fig. 1 zur Verdeutlichung einer ersten Ausführungsform mit manuell verschließbaren Lüftungsöffnungen,
- Fig. 4: einen Teilschnitt gemäß der Schnittlinie IV-IV in Fig. 3,
- Fig. 5: einen Teilquerschnitt gemäß der Schnittlinie V-V in Fig. 1 zur Verdeutlichung einer zweiten Variante mit einer zwangsweise erfolgenden Öffnung der Lüftungsöffnungen und
- Fig. 6: eine teilweise Draufsicht auf die zweite Variante gemäß der Schnittlinie VI-VI in Fig. 5.

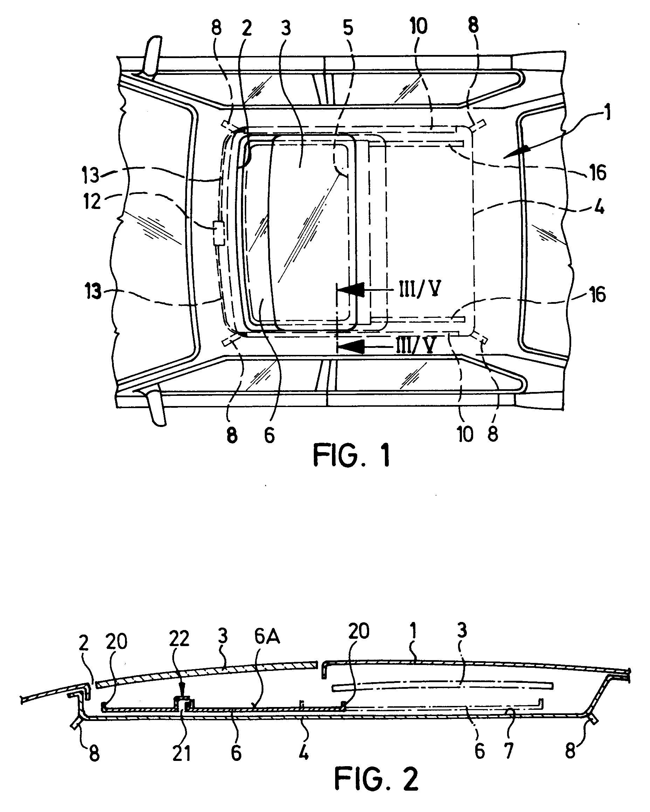

Ein insgesamt mit 1 bezeichnetes Fahrzeugdach weist eine Dachöffnung 2 auf, die mittels eines Deckels 3 wahlweise verschließbar oder zumindestens teilweise freigebbar ist. Hierzu ist der Deckel 3 mit einer Mechanik an einem Dachrahmen 4 bewegbar befestigt, an welchem der Deckel 3 die bekannten Funktionen eines Schiebehebedaches, nämlich das Anheben der Hinterkante in eine Lüfterposition und das Absenken der Hinterkante des Deckels mit anschließendem Verschieben unter die hintere feste Dachhaut ausführen kann. Diese letztgenannte vollständig geöffnete Position ist in Fig. 2 in strichpunktierten Linien angedeutet.

Der Dachrahmen 4 gibt seinerseits eine Rahmenöffnung 5 frei, die von ihren Maßen etwas kleiner ist als die Dachöffnung 2. Die Rahmenöffnung 5 ist mittels eines unter dem Deckel 3 längs verschiebbar angeordneten Himmels 6 wahlweise verschließbar oder wenigstens teilweise freigebbar. Eine Bewegung des Himmels 6 ist dabei unabhängig von einer Bewegung des Deckels 3 manuell vom Innenraum her einstellbar.

Während der Deckel 3 vorzugsweise als Solardeckel mit integrierten kristallinen Solarzellen ausgelegt und daher undurchsichtig ist, besteht der Himmel 6 aus einem transparenten und zusätzlich wasserdichten Material, wie Glas oder einem geeigneten Kunstglas. Dadurch ist der Himmel 6 geeignet, bei zumindestens teilweise geöffnetem Deckel 3 von oben her eindringendes Regenwasser mit seiner oberen Deckfläche 6A aufzunehmen und seitlich in längsverlaufende Wasserrinnen 7 einzuleiten, welche mit dem Dachrahmen 4 verbunden oder in diesen integriert sind. Die Wasserrinnen 7 ihrerseits sind an den vier Ecken des Dachrahmens 4 mit Ablaufrohren 8 verbunden, an welche im Fahrzeug innerhalb der A- bzw. C-Säulen installierte Ablaufschläuche angeschlossen werden. Die Wasserrinnen 7 werden nach außen von einer Seitenwand 9 begrenzt, welche vorteilhafterweise unmittelbar vom Dachrahmen 4 gebildet wird.

Am Dachrahmen 4 sind ferner zu beiden Seiten längsverlaufende Führungsschienen 10 angeordnet, die zur Führung von Gleitstücken 11 dienen, an denen eine den Deckel 3 betätigende Mechanik angelenkt ist. Diese Deckelmechanik ist mittels eines im vorderen Bereich des Dachrahmens 4 angeordneten Antriebes 12 betätigbar. Der Antrieb 12 kann manuell oder elektrisch ausgelegt sein. Er ist mit den hinteren Gleitelementen 11 über Antriebskabel 13 verbunden. Eine Bewegung der hinteren Gleitelemente 11 mittels der Antriebskabel 13 zwingt dabei dem Deckel 3 über einen Ausstellhebel 14 die Schwenk- oder Verschiebebewegungen für ein Öffnen des Deckels 3 auf.

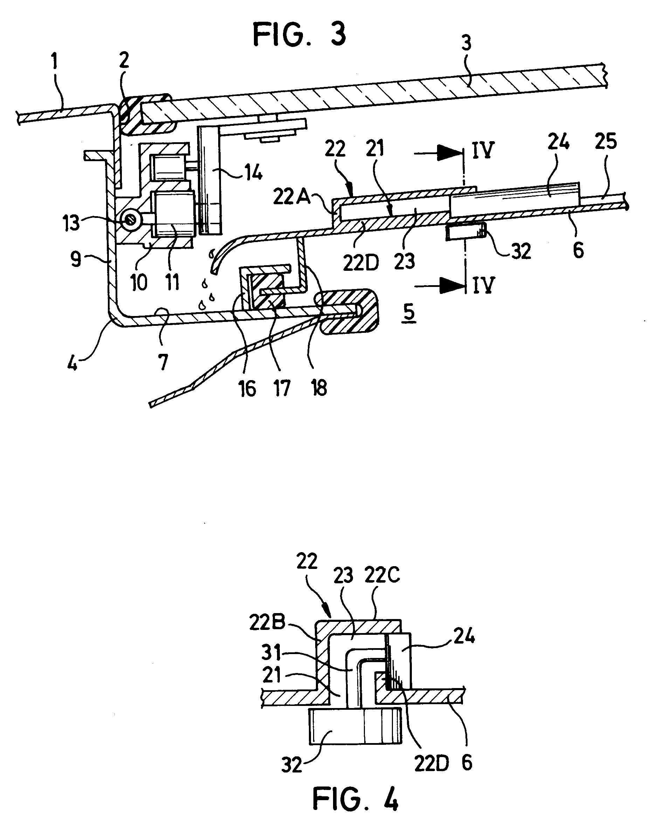

Am Dachrahmen 4 ist ferner eine Himmelführung 16 vorgesehen, die im vorliegenden Fall zur innenseitigen Begrenzung der Wasserrinne 7 und ferner zur Führung von Gleitschuhen 17 dient, an denen ein mit dem Himmel 6 verbundener Träger 18 befestigt ist. Wie aus Fig. 3 zu ersehen ist, erstreckt sich der Himmel 6 seitlich soweit über die Himmelführung 16 nach außen, daß ein sicheres Einleiten eingedrungenen Wassers in die Wasserrinne 7 gewährleistet ist.

Wie aus Fig. 2 zu ersehen, weist der Himmel 6 an seiner oberen Deckfläche 6A an seiner Vorderkante und an seiner Hinterkante nach oben vorspringende Abschlußwände 20 auf, die ein Abfließen des Wassers nach vorne oder hinten unterbinden. Wie ebenfalls aus Fig. 2 zu ersehen, läßt sich der Himmel 6 unabhängig von der Position des Deckels 3 vollständig nach hinten unter das feste Fahrzeugdach 1 verschieben. Wenn dabei gleichzeitig der Deckel 3 in der strichpunktierten Lage vollständig geöffnet ist werden die Dachöffnung 2 und die Rahmenöffnung 5 vollständig freigelegt, sodaß der Blick nach oben und eine großflächige Be- und Entlüftung ermöglicht wird.

Um auch bei geschlossenem Himmel 6 eine verbesserte Be- und Entlüftung des Fahrzeuginnenraumes zu ermöglichen, ist der Himmel 6 mit einer oder vorzugsweise mehreren Lüftungsöffnungen 21 versehen. Diese sind so ausgelegt, daß ein Eindringen von Wasser in jedem Falle auch bei geöffnetem Deckel 3 verhindert wird. Hierzu sind die den Himmel 6 vertikal durchbrechenden Lüftungsöffnungen 21 von einer vorzugsweise unmittelbar aus dem Material des Himmels 6 geformten Hutze 22 umgeben, welche die Lüftungsöffnungen 21 mit Seitenwänden 22A, einer Rückwand 22B und einer oberen Deckfläche 22C an vier Seiten umgibt. Lediglich in Fahrtrichtung nach hinten läßt die Hutze 22 als horizontale Fortsetzung der vertikal verlaufenden Lüftungsöffnung 21 dienende Schlitze 23 frei. Unterhalb der Schlitze 23 weisen die Hutzen 22 eine Vorderwand 22D auf, deren Oberkante sich deutlich über die obere Deckfläche 6A des Himmels 6 erhebt, sodaß auch bei geöffneten Schlitzen 23 kein Wasser in die Lüftungsöffnungen 21 eindringen kann.

Gemäß einer einfachen Ausführungsform weist der Himmel 6 mehrere solcher Hutzen 22 mit Schlitzen 23 auf, welche ständig geöffnet und somit für eine verbesserte Be- und Entlüftung des Innenraumes wirksam sind. Eine Regulierung des Luftdurchsatzes ist dabei über eine mehr oder weniger große Teilöffnung des Deckels 3 möglich.

Gemäß einer vorteilhaften in Fig. 3 und 4 dargestellten weiteren Variante sind die Schlitze 23 jedoch durch Schieber 24 als bewegbare Teile verschließbar und wahlweise zumindestens teilweise freilegbar. Die Schieber 24 sind dabei vor der Vorderwand 22D einer jeden Hutze 22 derart angeordnet, daß sie die Schlitze 23 vollständig verschließen können. Andererseits ist durch ein Verschieben der Schieber 24 quer zur Fahrtrichtung ein zumindestens teilweises Freigeben der Schlitze 23 möglich. Als Mittel zum Betätigen der Schieber 24 sind gemäß einer ersten Ausführungsform Schieberhebel 31 an der Rückseite der Schieber 24 angeordnet, welche durch die Lüftungsöffnungen 21 hindurch mit unterhalb der Lüftungsöffnungen 21 verschiebbar am Himmel 6 angeordneten Bedienelementen 32 in Verbindung stehen. Durch Schieberstangen 25 steht dabei jeder Schieber 24 mit einem gleichartigen benachbarten Schieber 24 in Verbindung, sodaß über ein einziges Bedienelement 32 zumindestens eine Reihe von quer zur Fahrtrichtung nebeneinander angeordneten Schiebern 24 gleichzeitig betätigbar ist. Bei einer gitterartigen zusätzlichen Verbindung der Schieberstangen 25 in Fahrzeuglängsrichtung ist sogar eine gleichzeitige Bedienung mehrerer Reihen von Schiebern 24 mittels eines einzigen Bedienelementes 32 möglich. Durch die Ausrichtung der Schlitze 23 in Fahrtrichtung nach hinten ist auch bei vollständig geöffnetem Deckel 3 gewährleistet, daß eine Be- und Entlüftung des Innenraums durch die Lüftungsöffnungen 21 zugfrei erfolgen kann. Wie aus Fig. 4 zu ersehen, ist die obere Deckfläche 22C jeder Hutze 22 soweit nach hinten gezogen, daß sie den Schlitz 23 von oben her überdeckt, sodaß auch bei vollständig geöffneten Schiebern 24 kein Wasser von oben her durch die Lüftungsöffnungen 21 in den Innenraum einzudringen vermag.

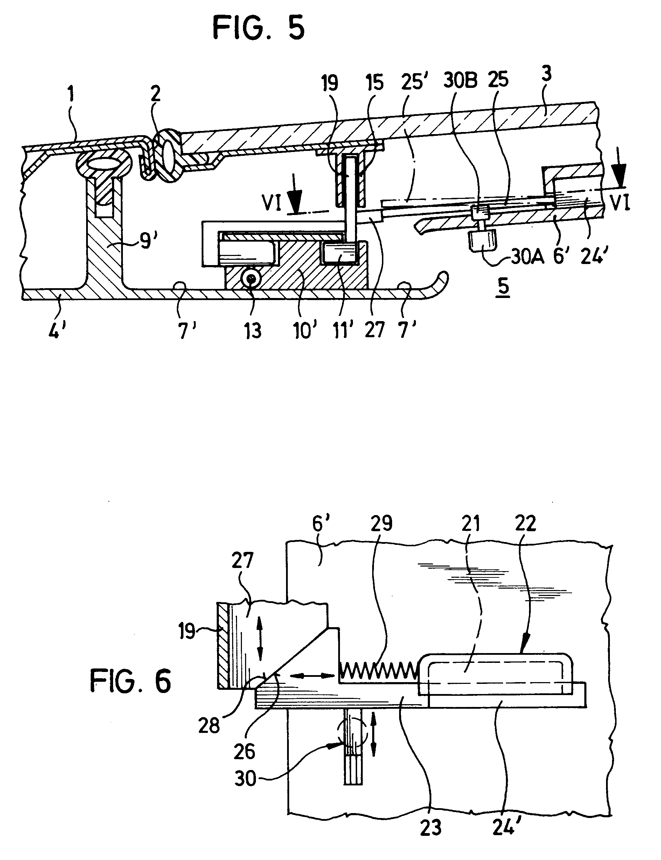

Bei einer alternativen Ausführungsform gemäß den Fig. 5 und 6, bei denen gleiche oder ähnliche Teile mit gleichen Bezugszeichen und einem zusätzlichen Hochkomma (') versehen sind, ist vorgesehen, daß Schieber 24' mit einer Mechanik des Deckels 3 derart zwangsweise gekoppelt sind, daß diese bei einer Öffnungsbewegung des Deckels 3, vorzugsweise zum Ausstellen von dessen Hinterkante, automatisch in Öffnungsrichtung betätigt werden. Hierzu weisen außen über die Rahmenöffnung 5 hinausragende Schieberstangen 25 Keilflächen 26 auf, welche mit umgekehrt geneigten Keilflächen 28 an Mitnehmern 27 zusammenwirken. Die Mitnehmer 27 sind dabei fest mit einer Kulisse 19 gekoppelt, die ihrerseits mit hinteren Gleitelementen 11' in Verbindung stehen. An der Kulisse 19 sind mittels nicht näher dargestellter Bolzen, welche in nicht näher dargestellte Kulissenschlitze derselben eingreifen, Deckelträger 15 verbunden, die ihrerseits am Deckel 3 befestigt sind. Bei einer Verschiebung der Gleitelemente 11' mittels der Antriebskabel 13 für ein Anheben der Hinterkante des Deckels 3 wird die Kulisse 19 um einen bestimmten Betrag nach vorne bewegt. Dabei drückt gleichzeitig die Keilfläche 28 des mit der Kulisse 19 gekoppelten Mitnehmers 27 über die Keilfläche 26 die Schieberstange 25 nach innen, wodurch der Schieber 24' automatisch einen in einer Hutze 22 angeordneten, mit einer Lüftungsöffnung 21 verbundenen Schlitz 23 teilweise freigibt. Die Bewegungen des Deckels 3 und des Schiebers 24' sind dabei so miteinander gekoppelt, daß bei einer vollständigen Ausstellung der Hinterkante des Deckels 3 auch die Schlitze 23 vollständig freigelegt sind. Eine zwischen der Hutze 22 und der Schieberstange 25 angeordnete Feder 29 sorgt bei einer umgekehrten Bewegung des Gleitelementes 11' für eine Absenkbewegung der Hinterkante des Deckels 3 für eine Rückführung der Schieberstange 25, wobei gleichzeitig die Schlitze 23 mittels der Schieber 24' geschlossen werden.

Die automatische Ankopplung einer Öffnung der Lüftungsschlitze an eine Ausstellung der Hinterkante des Deckels 3 entspricht dabei dem Wunsch des Bedienenden, mit einer solchen Ausstellung der Deckelhinterkante einen erhöhten Luftdurchsatz zu erreichen. Sollte dies bei bestimmten Umgebungsbedingungen und/oder einer erhöhten Empfindlichkeit der Fahrzeuginsassen nicht erwünscht sein, so kann der Bediener mittels einer Kupplung 30 die automatische Öffnung der Schlitze 23 unterbinden. Die Kupplung 30 besteht aus einem von der Innenseite des Himmels 6' zugänglichen Bedienelement 30A, welches durch einen im Himmel 6' in der Nähe des Außenrandes längsverlaufenden Schlitz mit einem längsverschiebbaren, in der Längsrichtung bezüglich seiner Höhe keilförmigen Riegel 30B verbunden ist. Bei einer Verschiebung des Bedienelementes 30A der Kupplung 30 fährt der keilförmige Riegel 30B unter das elastisch gestaltete äußere Ende der Schieberstange 25 und biegt dieses dabei soweit nach oben, daß die Keilfläche 26 außer Eingriff mit dem Mitnehmer 27 und dessen Keilfläche 28 gerät. Durch das Verkeilen des Riegels 30B mit den elastisch ausgelenkten Enden der Schieberstange 25 werden die Schieber 24' gleichzeitig in der zum Zeitpunkt der Verriegelung vorhandenen Position arretiert. Diese Verriegelung kann wahlweise in jeder Position der Schieber 24' erfolgen, sodaß vom Bediener auch eine beliebige, als vorteilhaft empfundene Zwischenöffnungsposition der Schieber 24' fest eingetellt werden kann. Die angehobene Position der Schieberstange 25 ist in Fig. 5 in gestrichelten Linien dargestellt und mit 25' bezeichnet.

Durch das erfindungsgemäße Fahrzeugdach wird eine große Variationsbreite bezüglich der Durchlässigkeit von Licht und Luft eines Fahrzeugdaches erreicht. Mit besonderem Vorteil ist eine solche Anordnung mit einem transparenten Himmel in Verbindung mit einem lichtundurchlässigen Deckel 3 anwendbar, der entweder wie beschrieben als Solardeckel oder aber auch alternativ dazu als Blechdeckel ausgelegt sein kann.

### Bezugszeichenliste

- 1: Fahrzeugdach
- 2: Dachöffnung
- 3: Deckel
- 4, 4': Dachrahmen
- 5: Rahmenöffnung
- 6, 6': Himmel
- 6A: obere Deckfläche (von 6)
- 7, 7': Wasserrinnen
- 8: Ablaufrohre
- 9, 9': Seitenwand (von 7)
- 10, 10': Führungsschiene
- 11, 11': Gleitstück
- 12: Antrieb
- 13: Antriebskabel
- 14: Ausstellhebel
- 15: Deckelträger
- 16: Himmelführung
- 17: Gleitschuhe
- 1: 8 Himmelträger
- 19: Kulisse
- 20: Abschlußwand
- 21: Lüftungsöffnung
- 22: Hutze
- 22A: Seitenwand
- 22B: Rückwand
- 22C: Deckfläche
- 22D: Vorderwand
- 23: Schlitze
- 24, 24': Schieber
- 25: Schieberstange
- 26: Keilfläche
- 27: Mitnehmer
- 28: Keilfläche
- 29: Feder
- 30: Kupplung
- 30A: Bedienelement
- 30B: Riegel
- 31: Schieberhebel
- 32: Bedienelement

## Patentansprüche

1. Fahrzeugdach (1) mit einem eine Dachöffnung (2) wahlweise verschließenden oder zumindestens teilweise freigebenden Deckel (3) sowie mit einem unterhalb des Deckels (3) verschiebbar angeordneten Himmel (6,6') aus einem wasserfesten transparenten Material, **dadurch gekennzeichnet**, daß der Himmel (6,6') Lüftungsöffnungen (21) aufweist, die derart ausgebildet sind, daß sie ein Eindringen von Wasser verhindern.

2. Fahrzeugdach nach Anspruch 1, **dadurch gekennzeichnet**, daß die Lüftungsöffnungen (21) durch bewegbare Teile (Schieber 24,24') verschließbar sind.

3. Fahrzeugdach nach Anspruch 2, **dadurch gekennzeichnet**, daß die bewegbaren Teile (24') bei einem Öffnen des Deckels (3) zwangsweise in Öffnungsrichtung betätigbar sind.

4. Fahrzeugdach nach Anspruch 3, **dadurch gekennzeichnet**, daß die zwangsweise Betätigung der bewegbaren Teile (24') durch einen Antrieb (12) des Deckels (3) erfolgt.

5. Fahrzeugdach nach Anspruch 4, **dadurch gekennzeichnet**, daß zwischen den bewegbaren Teilen (24') und dem Antrieb (12) des Deckels (3) eine manuell betätigbare Kupplung (30) zum Ein- und Ausschalten der zwangsweisen Betätigung angeordnet ist.

6. Fahrzeugdach nach einem der Ansprüche 2 bis 5, **dadurch gekennzeichnet**, daß die Mittel (24,25) zum Öffnen bzw. Schließen der Lüftungsöffnungen (21) über der oberen Deckfläche (6A) des Himmels (6) angeordnet sind.

7. Fahrzeugdach nach einem der Ansprüche 2 bis 5, **dadurch gekennzeichnet**, daß die Mittel (31) zum Öffnen bzw. Schließen der Lüftungsöffnungen (21) zumindestens teilweise in den Lüftungsöffnungen (21) verlaufen.

8. Fahrzeugdach nach einem der vorhergehenden Ansprüche, **dadurch gekennzeichnet**, daß die Lüftungsöffnungen (21) von Schlitzen (23) gebildet werden, deren Unterkante über der oberen Deckfläche (6A) des Himmels (6,6') angeordnet ist.

9. Fahrzeugdach nach Anspruch 8, **dadurch gekennzeichnet**, daß die Schlitze (23) in Fahrtrichtung nach hinten offen sind.

10. Fahrzeugdach nach Anspruch 8 oder Anspruch 9, **dadurch gekennzeichnet**, daß die Schlitze (23) von oben her abgedeckt sind.
